# FASCICULE DE BREVET EUROPEEN

(11) **EP 2 447 336 B1**
(45) Date de publication et mention de la délivrance du brevet: **07.02.2018**
(21) Numéro de dépôt: 11186760.2
(22) Date de dépôt: 26.10.2011
(51) Int. Cl.: C09K 11/06, B27K 5/02

(54) **Procédé pour le tratiement du bois**
Verfahren zur Holzbehandlung
Method for treating wood

(30) Priorité: 26.10.2010 FR 1058798
(43) Date de publication de la demande: 02.05.2012
(73) Titulaire: Sarpap & Cecil Industries, 33000 Bordeaux (FR)
(72) Inventeur: Fahy, Olivier, 24100 LEMBRAS (FR); MESSAOUDI, Daouïa, 69800 Saint-Priést (FR)
(74) Mandataire: Ipside

(56) Documents cités:
- EP-A1- 0 568 731
- EP-A1- 0 697 170
- EP-A1- 1 881 108
- WO-A1-2006/015963
- WO-A1-2006/045714
- WO-A1-2010/147820
- CA-A1- 2 576 882
- GB-A- 1 243 990
- GB-A- 2 268 403
- US-A- 5 902 454
- Mughal ET AL: "Synthesis and study of some amino derivatives of triazinyl stilbene series as fluorescent whitening agent", J.Chem.Soc.Pak., 1 February 2006 (2006-02-01), XP055307649, Retrieved from the Internet: URL:https://www.researchgate.net/profile/J avaid_Mughal/publication/235991768_Synthes is_and_study_of_some_amino_derivatives_of_ triazinyl_stilbene_series_as_fluorescent_w hitening_agent/links/02e7e51547e2c7399e000 000.pdf?inViewer=0&pdfJsDownload=0&origin= publication_detail [retrieved on 2016-10-05]

## Description

La présente invention concerne un procédé pour le traitement du bois. Elle concerne également l'utilisation de cette composition pour le traitement du bois ou de matériaux dérivés du bois.

Le bois ou les matériaux dérivés du bois sont sujets à différentes altérations de surfaces susceptibles de se propager à l'ensemble du substrat. Ces dégradations sont de natures biologiques, physiques ou chimiques.

Ainsi les altérations liées aux insectes xylophages, aux termites ou aux champignons lignivores exigent un traitement insecticide ou fongicide parfois couplé à une hydrofugation.

De même, les remontées de tanins propres aux bois feuillus peuvent êtres maîtrisées grâce à l'application de préparations adaptées.

Ces différentes propriétés conférées au matériau peuvent êtres ou non combinées à des traitements ignifuges ou retardateurs de feu ainsi qu'à des protections contre les rayons UV. En effet, ces derniers sont responsables de grisaillement du bois.

L'efficacité de ces solutions dépend naturellement de leurs caractéristiques et performances intrinsèques mais également du respect des quantités mises en oeuvre.

Au-delà de ces paramètres, l'homogénéité de l'application et le recouvrement intégral de la surface du support à protéger sont des critères fondamentaux de réussite.

Il est fréquent que lors d'une application par pulvérisation d'un traitement curatif de charpente, certaines parties de l'ouvrage échappent au traitement du fait des angles de projection.

De même lors de la réalisation des éléments de charpentes industrielles, il est fréquent que les pièces de bois préalablement traitées subissent des coupes d'ajustement dont il est impératif que les surfaces soient également traitées.

Bien évidement, un traitement insecticide en container de transport, un traitement hydrofuge ou ignifuge ne sont réellement efficaces que si l'ensemble de la surface extérieure des pièces a bénéficié de l'application.

Dans ces domaines, tout manque ne peut que conduire qu'à l'échec du traitement, l'objectif recherché n'étant alors pas atteint.

Aujourd'hui, le contrôle du traitement de ces surfaces ne se réalise, au mieux, qu'avec difficultés. En effet, les formulations appliquées sont incolores pour d'évidentes raisons d'esthétique ou par nécessité technique.

De plus, les produits utilisés sont la plupart du temps formulés en phases aqueuse. Ce vecteur s'évapore rapidement et ne laisse pas de trace ni de coloration particulière sur les surfaces traitées ce qui en rend le contrôle visuel impossible au terme de cette évaporation.

L'objectif de la présente invention est donc de proposer une composition pour le traitement du bois, qui soit simple dans sa conception et son mode opératoire, économique et autorisant un contrôle non destructif et rapide de la qualité et de l'uniformité de son application sur une pièce de bois à protéger.

A cet effet, l'invention concerne un procédé pour le traitement du bois ou de matériaux dérivés du bois.

Selon l'invention, ce procédé met en oeuvre une composition selon la revendication 1. Cette composition permet avantageusement de révéler la présence et l'homogénéité d'application de produits de traitement des surfaces en bois ou matériaux dérivés du bois.

A titre illustratif, cette composition confère au bois un traitement préventif, curatif insecticide, anti-termites ou fongicide, insecticide et anti-termites des bois à protéger. Cette composition est une composition à base d'eau. Cette composition pour le traitement du bois ayant ses avantages particuliers et susceptibles de combinaisons techniques suivantes:
- ledit au moins un agent fluorescent absorbe dans le spectre compris entre 300 nm et 500 nm, et encore mieux dans l'UVA entre 350 nm et 415 nm, en réémettant entre 400 et 525 nm,
- le pourcentage dudit agent fluorescent dans ladite composition est entre 0,01 et 1 pourcent en poids par rapport au poids total de ladite composition,
- cette composition est une émulsion aqueuse ou une dispersion aqueuse ou encore une solution aqueuse,
- ledit au moins un azurant optique est choisi parmi les dérivés du stilbène, les dérivés benzoxazole et les dérivés de naphthalimide de manière à ne pas modifier l'état physique de la composition lors de son ajout.
- cette composition comprend au moins un des éléments suivants : un ou plusieurs insecticides, un ou plusieurs fongicides, un agent susceptible de filtrer les UV à l'exception du spectre dans lequel ledit au moins un agent fluorescent absorbe, un hydrofuge, un agent ignifuge, un retardateur de feu, un colorant, un agent de conservation et des combinaisons de ceux-ci,

A titre d'exemple, l'agent insecticide est choisi dans la famille des pyréthrinoïdes, des néonicotinoïdes ou encore d'autres familles d'insecticides telles que les carbamates. A titre purement illustratif, on pourra choisir cet insecticide dans le groupe comprenant la Bifenthrine, l'alpha-cyperméthrine, la cyperméthrine, la perméthrine, l'etofenprox, l'imidacloprid, le thiacloprid.

De préférence, le fongicide est un fongicide organique ou encore mieux une combinaison de différents fongicides organiques.

Avantageusement, l'agent de conservation peut comporter au moins un antioxydant.

A titre purement illustratif, l'agent ignifugeant choisi parmi les composés à base de bore, à base de phosphore et/ou azote, et encore mieux parmi les composés azotés et phosphatés.

De préférence, l'agent ignifugeant sera choisi parmi le groupe comprenant un composé à base d'azote et de phosphate ou de polyphosphate ou de phosphinate ou encore de leurs sels.

A titre d'exemple, l'hydrofuge pourra être choisi parmi les composés à base de silanes ou les composés siliconés ou fluorés.

La présente invention concerne également l'utilisation d'une composition pour le traitement du bois telle que décrite précédemment pour le traitement du bois.

De préférence, on utilise cette composition pour le traitement d'au moins la charpente d'un bâtiment.

Cette composition peut également être mise en oeuvre pour traiter des bois de structure et de parement de constructions industrielles ou d'habitation, des bois de menuiserie, bardages en usage préventif.

Elle trouve encore des applications dans le traitement de préservation temporaire des sciages frais ou le traitement de préservation du bois et des matériaux dérivés du bois transportés par container ou navire vraquier

Cet azurant optique est dispersé dans la composition à base d'eau à des doses variant de 0,01 % (m/m) à 5,00 % (m/m). Cet azurant optique est notamment choisi dans la famille des stilbènes.

Le DSBP, le DAS1 et le DAS2 ou 4,4'-bis[(4-(4-sulfoanilino)-6-bis(2-hydroxyethyl)amino-1,3,5-triazin-2-yl)amino]stilbene-2,2'-disulfonate] distyrylbiphenyl (DSBP) et les dérivés de diaminostilbene (DAS) ajoutés en quantités variant de 0,01 % à 0,5 % dans les compositions à tracer conviennent particulièrement bien à l'usage décrit par l'invention.

A la lumière du jour, l'adjuvent incorporé ne modifie pas la coloration du produit de traitement, ni celle de la surface traitée. Cet azurant optique agit comme traceur et rend la surface traitée fluorescente lorsqu'elle est exposée au rayonnement d'une lampe UV de longueur d'onde déterminée.

Cet azurant optique autorise ainsi un contrôle visuel de l'homogénéité de l'application ainsi que par l'intensité de la fluorescence, une estimation de la quantité de formulation déposée.

Le principe de fonctionnement des agents azurants est connu de l'homme de l'art. Les molécules utilisées dans cet usage ont pour propriété d'absorber le rayonnement ultra violet émis entre 300 et 400 nanomètres. Excitée par une lampe émettant dans cette plage de longueur d'ondes, la molécule réémet cette énergie par fluorescence dans la partie visible du spectre comprise entre 400 et 500 nanomètres. La fluorescence réémise est directement liée pour une molécule connue au produit de l'énergie initialement émise par la teneur en azurant optique fixée au support.

Toutefois, les agents azurants étant photosensibles, ils se dégradent à la lumière en sous produits inertes sur le plan de la fluorescence. En choisissant judicieusement l'azurant optique pour une utilisation précise, il est alors possible d'obtenir des effets plus ou moins persistants dans le temps. Ainsi, et dans un mode de mise en oeuvre de la présente invention, on cherche à révéler le traitement temporaire des sciages frais transportés par voie maritime en container.

La préservation de ceux-ci à l'égard des moisissures se fait par une pulvérisation d'un fongicide sur l'intégralité de leur surface alors que les piles de bois sont installées dans le container de transport. Il est important dans ce cas de vérifier l'homogénéité de l'application. La coloration du produit de préservation est impossible pour d'évidentes raisons de nettoyage du container une fois la destination atteinte. En utilisant une composition pour le traitement du bois telle que décrite précédemment, il est alors facile de vérifier le bon traitement tant avant le départ qu'à l'ouverture du conditionnement. En utilisant pour ce marquage, un agent très photosensible telle que l'esculine par exemple, il est facile en laissant l'intérieur du container exposé à la lumière d'effacer toutes traces de traitement avant une nouvelle utilisation.

Dans un autre mode de mise en oeuvre de la présente invention, des essais ont été conduits en incorporant des quantités croissantes d'azurant optique à une composition insecticide et fongicide constituée d'une micro émulsion aqueuse destinée à la préservation préventive des bois massifs.

Cet azurant optique qui est ici le 4,4-bis-(sulfostyryl)-biphényl sel disodique, a été incorporé dans la composition selon des quantités croissantes de 0,01 à 0,1 % en masse. De par ses caractéristiques de polarité, ce produit est parfaitement soluble à froid dans l'eau.

Les échantillons de bois utilisés sont des sections de lambris en épicéa larges de 90 millimètres et longues de 200 millimètres. Lors du choix des échantillons, il faut veiller à ce que les cernes d'accroissement soient orientés perpendiculairement à la face de la pièce ou au plus inclinés de 45° par rapport à cette face. En effet, ce choix d'inclinaison des cernes permet de favoriser la pénétration et la diffusion de la composition appliquée dans le bois pour avoir un test qui soit reproductible.

Une fois la composition déposée par pulvérisation homogène à raison de 200,00 grammes par mètre carré de surface à traiter, ces échantillons de bois sont mis à sécher durant 48 heures dans une enceinte obscure, ventilée, maintenue à une température de 20° C et à humidité contrôlée.

Au terme de la période de séchage, les échantillons ont été exposés au rayonnement d'une lampe UV dont la longueur d'onde (λ) est de 365 nanomètres. Leur luminescence a été observée et notée selon une échelle variant de 0 à 4 (Tableau 1).

La notation 0 correspond à une absence de fluorescence et la note 4 au seuil maximal à partir duquel une augmentation de la quantité d'azurant optique ne génère plus d'augmentation de la fluorescence dans les conditions de l'essai.

**TABLEAU I**

| Numéros d'échantillons | Concentration en azurant optique (%m/m) | Notation Fluorescence (échelle 0 à 4) |
|---|---|---|
| 1 à 10 | 0 | 0 |
| 11 à 20 | 0,001% | 1 |
| 21 à 30 | 0,005% | 2 |
| 31 à 40 | 0,01% | 3-4 |
| 41 à 50 | 0,05% | 4 |
| 51 à 60 | 0,1% | 4 |

Cette première expérimentation a démontré les avantages de la présente invention et fixer à 0,05% (m/m) la dilution de 4,4-bis-(sulfostyryl)-biphényl sel disodique dans la composition en essai comme optimale.

Afin de vérifier si l'estimation de la dose appliquée était possible grâce à l'invention, une seconde série d'essai à été conduite selon les modalités précédemment décrites.

La dilution de l'azurant optique - 4,4-bis-(sulfostyryl)-biphényl sel disodique - dans la composition de traitement a été fixée à 0,05% (m/m). Les variations ont consisté en l'application de quantités croissantes de la composition sur les échantillons de bois. Ces variations de quantité et les résultats associés sont résumés ci-dessous (Tableau II).

**TABLEAU II**

| Numéros échantillons | Rétention théorique en grammes/m². | Quantité moyenne appliquée en grammes/m². | Résultats de fluorescence sur une échelle de 0 à 4 |
|---|---|---|---|
| 1 à 4 | 0 | 0 | **0** |
| 5 à 8 | 18,75 | 17,56 | **1** |
| 9 à 12 | 37,50 | 38,75 | **1** |
| 13 à 16 | 75,00 | 76,83 | **1** |
| 17 à 20 | 150,00 | 154,17 | **2** |
| 21 à 24 | 300,00 | 296,12 | **4** |

Ces résultats démontrent clairement la possibilité d'une estimation du dépôt ou non de la dose optimale de la composition pour le traitement du bois.

Par ailleurs, les échantillons 21 à 24 restés exposés à l'extérieur pendant 240 heures en plein mois de Juillet sur un châssis incliné à 45° et orienté au sud ouest ne réémettent pas de fluorescence au terme de cette exposition. L'agent azurant qui est photosensible, s'est intégralement dégradé à la lumière

## Revendications

1. Procédé pour le traitement du bois ou de matériaux dérivés du bois, ledit procédé mettant en oeuvre une composition comprenant un ou plusieurs insecticides et un ou plusieurs fongicides, **caractérisé en ce que** :
- cette composition comprend au moins un agent fluorescent pour produire une fluorescence lorsque ladite composition est soumise à un rayonnement lumineux,
- ledit au moins agent fluorescent est un azurant optique choisi parmi les dérivés du stilbène, les dérivés benzoxazole et les dérivés de naphthalimide, et **en ce que**
le pourcentage dudit au moins un agent fluorescent est compris entre 0,01 et 1 pourcent en poids par rapport au poids total de ladite composition ; **en ce que** ledit au moins un agent fluorescent absorbe dans le spectre compris entre 300 nm et 500 nm et encore mieux dans l'UVA entre 350 nm et 415 nm, et **en ce que** ladite composition est une émulsion aqueuse ou une dispersion aqueuse ou encore une solution aqueuse,
ladite composition comprenant au moins un des éléments suivants : un insecticide, un fongicide, un agent susceptible de filtrer les UV à l'exception du spectre dans lequel ledit au moins un agent fluorescent absorbe, un hydrofuge, un agent ignifuge, un retardateur de feu, un colorant, un agent de conservation et des combinaisons de ceux-ci.

2. Procédé selon la revendication 1, **caractérisé en ce qu'**il est mis en oeuvre pour le traitement d'au moins la charpente d'un bâtiment.

## Patentansprüche

1. Verfahren zur Behandlung von Holz oder Holzwerkstoffen, bei dem eine Zusammensetzung, die ein oder mehrere Insektizide und ein oder mehrere Fungizide umfasst, verwendet wird, **dadurch gekennzeichnet, dass**:
- diese Zusammensetzung mindestens ein fluoreszierendes Mittel umfasst, um eine Fluoreszenz zu produzieren, wenn die Zusammensetzung einer Lichtstrahlung ausgesetzt wird,
- es sich bei dem mindestens einen fluoreszierenden Mittel um einen optischen Aufheller handelt, der aus Stilbenderivaten, Benzoxazolderivaten und Naphthalimidderivaten ausgewählt ist, und
der Prozentanteil des mindestens einen fluoreszierenden Mittels zwischen 0,01 und 1 Gewichtsprozent, bezogen auf das Gesamtgewicht der Zusammensetzung, liegt;
das mindestens eine fluoreszierende Mittel im Spektrum zwischen 300 nm und 500 nm und noch besser im UVA zwischen 350 nm und 415 nm absorbiert und es sich bei der Zusammensetzung um eine wässrige Emulsion oder eine wässrige Dispersion oder auch eine wässrige Lösung handelt, wobei die Zusammensetzung mindestens eines der folgenden Elemente umfasst: ein Insektizid, ein Fungizid, ein Mittel, das zum Herausfiltern von UV mit Ausnahme des Spektrums, in dem das mindestens eine fluoreszierende Mittel absorbiert, befähigt ist, ein Quellschutzmittel, ein Flammschutzmittel, einen Brandverzögerer, ein Farbmittel, ein Konservierungsmittel und Kombinationen davon.

2. Verfahren nach Anspruch 1, **dadurch gekennzeichnet, dass** es zur Behandlung von mindestens dem Gebälk eines Gebäudes verwendet wird.

## Claims

1. Method for treating wood or materials derived from wood, said method using a composition comprising one or more insecticides and one or more fungicides, **characterized in that**:
- this composition comprises at least one fluorescent agent in order to produce a fluorescence when said composition is subjected to light radiation,
- said at least one fluorescent agent is an optical brightener chosen from stilbene derivatives, benzoxazole derivatives and naphthalimide derivatives, and **in that**
the percentage of said at least one fluorescent agent is between 0.01 and 1 percent by weight relative to the total weight of said composition;
**in that** said at least one fluorescent agent absorbs in the spectrum between 300 nm and 500 nm and better still in the UVA between 350 nm and 415 nm, and **in that** said composition is an aqueous emulsion or an aqueous dispersion or else an aqueous solution,
said composition comprising at least one of the following components: an insecticide, a fungicide, an agent capable of filtering UV apart from the spectrum in which said at least one fluorescent agent absorbs, a water repellent, a flame retardant, a fire retardant, a dye, a preservative and combinations thereof.

2. Method according to Claim 1, **characterized in that** it is used for treating at least the framework of a building.
